# EUROPEAN PATENT SPECIFICATION

(11) **EP 2 085 295 B1**
(45) Date of publication and mention of the grant of the patent: **22.09.2010**
(21) Application number: 09000092.8
(22) Date of filing: 07.01.2009
(51) Int. Cl.: B62D 21/02, B60P 1/28

(54) **Auxiliary frame for mounting a crane on the chassis of a vehicle**
Hilfsrahmen zur Montage eines Krans auf einem Fahrgestell
Cadre auxiliaire pour assembler une grue sur le châssis d'un véhicule

(30) Priority: 07.01.2008 BE 200800008
(43) Date of publication of application: 05.08.2009
(73) Proprietor: Werkhuizen Jacobs, naamloze vennootschap, 3560 Lummen (BE)
(72) Inventor: Jacobs, Patrick, 3560 Lummen (BE); Lenaerts, Erik, 3990 Peer (BE)
(74) Representative: Donné, Eddy

(56) References cited:
- EP-A- 1 832 498
- WO-A-03/053770
- DE-A1- 19 625 380
- DE-U1- 29 907 602
- FR-A- 2 853 296

## Description

The present invention concerns an auxiliary frame for mounting a crane on the chassis of a vehicle, for example a lorry.

The aim hereby is to mount the auxiliary frame itself on the chassis of the vehicle, after which the crane can be fixed to the auxiliary frame, see e.g. DE 299 07602U1.

Without restricting the invention thereto, the present invention in particular concerns an auxiliary frame whereby bolts, directed crosswise to the bearing face of the crane to be mounted, must be anchored in the auxiliary frame and whereby the intermediate distance between the bolts depends on the crane to be mounted and cannot be changed in view of the assembly.

A first task of such an auxiliary frame for mounting a crane on a vehicle is to make sure that the chassis of the vehicle is sufficiently reinforced so as to be able to absorb the load of the crane well.

Further, such an auxiliary frame is designed to distribute the load of the crane to the lorry as evenly as possible over the chassis.

Further, such an auxiliary frame aims an easy mounting of the crane on the vehicle.

Besides, it is often important to obtain sufficient play with the auxiliary frame between the crane to be mounted and certain parts of the vehicle, such as for example the wheels, the gearbox or the like.

Such auxiliary frames are already known according to the present state of the art, but they have numerous disadvantages.

In order to mount a crane on the chassis of a lorry, it is customary to compose an auxiliary frame by welding together two longitudinal girders and two or more cross girders.

The longitudinal girders of the auxiliary frame hereby usually follow the contours of the chassis of the lorry.

In many cases, however, the girders of the lorry' s chassis are bent, such that it is necessary to use bent longitudinal girders for the auxiliary frame.

This is complicated of course, and such a known auxiliary frame moreover is only suitable for the type of lorry for which it was designed.

Another disadvantage of the known auxiliary frames is that their development is very time-consuming and labour-intensive and moreover is complex.

Indeed, when putting a crane on a lorry, two positions are usually possible, i.e. in front of the lorry behind the cabin on the one hand, and all the way at the back of the lorry on the other hand, for example behind the loading platform of the lorry.

Sufficient play must always be provided hereby between the crane and the cabin or the loading platform so as not to hinder the movements of the crane while lifting.

Nevertheless, said play is preferably kept to a minimum so as not to lose too much space on the lorry.

Also, in order to determine the exact position of the crane on the lorry, the crane is temporarily put on the lorry before the auxiliary frame can be actually designed.

It goes without saying that this is a very time-consuming procedure.

After the longitudinal and cross girders have been welded together, the auxiliary frame is mounted a first time on the chassis of the lorry for a control according to the known design methods, for example by means of sideboards with which the girders of the auxiliary frame are screwed down on the chassis.

If everything appears to be fine, such an auxiliary frame must be taken from the lorry again, for example by removing the sideboards again, after which the auxiliary frame is to be subjected to some surface treatments.

Said surface treatments usually consist of sandblasting and painting the auxiliary frame.

From what precedes, it is clear that the development of the known auxiliary frames for mounting a crane on a vehicle is a very complicated and laborious, and thus a time-consuming and expensive process.

Moreover, the auxiliary frames are only suitable for a single type of lorry and/or crane or for a few types of lorries and/or cranes at the most showing very much resemblance.

The present invention aims to remedy one or several of the above-mentioned and other disadvantages.

To this end, the present invention concerns an auxiliary frame for mounting a crane on the chassis of a vehicle, which auxiliary frame is composed of at least two longitudinal struts and at least two transverse elements which can be displaced in the longitudinal direction of the longitudinal struts in a discrete or discontinuous manner by means of bolts provided through holes in the longitudinal struts, which holes are situated at a distance from one another in the longitudinal direction, whereby the transverse elements are provided with grooves extending in the longitudinal direction which are designed for fixing the crane by means of bolts which are provided through these grooves and whereby the distance between the holes in the longitudinal struts on the one hand and the length of the grooves on the other hand is selected such that the crane can be fixed in any location whatsoever in the longitudinal direction of the longitudinal strut.

A major advantage of an auxiliary frame according to the invention is that the design and strength analysis only have to be carried out once, after which it can be mounted on several types of vehicles or can be used for various types of cranes.

Another advantage of such an auxiliary frame according to the invention is that it makes the mounting of a crane on a vehicle considerably easier, resulting in a tremendous gain of time and thus also in a lower cost price.

This can be explained in that the auxiliary frame is built of longitudinal struts on which transverse elements can be moved, at least in a gradual or discrete manner, such that the intermediate distance between the transverse elements of the auxiliary frame can be adjusted to a certain degree as a function of the application for which the auxiliary frame will be used.

Thus can be made sure that at least transverse elements are provided on the longitudinal struts at the bolts or threaded rods with which the crane or the equipment is to be fixed on the chassis.

The length of the aforesaid grooves extending in the longitudinal direction in the transverse elements is hereby preferably sufficiently large to bridge at least the intermediate distance between the holes in the longitudinal struts, which holes determine the gradual adjustment of the transverse elements.

In this way, a transverse element can always be positioned on the longitudinal strut in such a manner that a bolt of the crane always fits in an aforesaid groove in order to fix the crane on the auxiliary frame and thus on the chassis of the vehicle.

According to a preferred embodiment of an auxiliary frame according to the invention, the auxiliary frame comprises at least two longitudinal struts which are connected by at least two transverse struts.

The aforesaid longitudinal struts are hereby preferably U-shaped, whereby the open sides of the U-shaped longitudinal struts are directed towards one another.

An advantage of such an auxiliary frame according to this embodiment is that it can be easily assembled and that such U-shaped struts are easy to manufacture and moreover have a relatively good bending stiffness to be applied in such an auxiliary frame.

The U-shape of the longitudinal struts somewhat envelopes the transverse struts, which considerably simplifies the connection between the transverse struts and the longitudinal struts.

According to another preferred embodiment of an auxiliary frame according to the invention, the longitudinal struts are provided with perforations situated at a regular distance from one another.

An advantage of such an embodiment of an auxiliary frame is that the gradual or discrete adjustment of a transverse element on a longitudinal strut can always be done in the same manner over the entire length of the longitudinal strut, as the intermediate distance between successive holes in the longitudinal strut does not vary over the length, for example.

According to another preferred embodiment of an auxiliary frame according to the invention, the central part of the transverse struts is additionally tubular, but other forms are not excluded either according to the invention.

Preferably, the far ends of the transverse struts are also provided with an end plate which can rest against a longitudinal strut, whereby every end plate is moreover provided with perforations corresponding to the perforations in the longitudinal struts for connecting a transverse strut to a longitudinal strut by means of nuts and bolts.

The height of an aforesaid end plate hereby preferably corresponds to the available height in a U-shaped longitudinal strut.

Naturally, positioning a transverse strut in relation to a longitudinal strut of the auxiliary frame is made easier with such an embodiment.

According to another preferred embodiment of an auxiliary frame according to the invention, the height of the central part of a transverse strut is considerably smaller than the height of an end plate of the transverse strut.

Such an embodiment offers the advantage that parts of bolts and nuts for connecting a crane to such a transverse strut which protrude from the transverse strut can nevertheless be concealed within the contours of the longitudinal struts.

Moreover, with such a transverse strut, some space can be left for any possible smaller projections from the crane at the central part of a transverse strut, since the central part of a transverse strut, due to its smaller height, may be staggered somewhat in relation to the far ends of the transverse strut, i.e. in relation to the areas where the crane is actually supported.

Preferably, the central part of a transverse strut is not provided centrally on an end plate of the transverse strut in the vertical height, but rather towards one side on a longitudinal edge of said end plate or in the vicinity of said longitudinal edge.

Indeed, concealing the bolts and nuts for fixing the crane between the longitudinal struts is often less important than leaving a sufficiently large space to receive any projections from the crane.

According to another preferred embodiment, also the width of the central part of a transverse strut is smaller than the width of an aforesaid end plate of the transverse strut, but this is not strictly necessary.

However, such an embodiment may be advantageous in that holes may also be provided in the parts of the width of the end plate, adjacent to the central part of the transverse strut, for connecting a transverse strut to a longitudinal strut of the auxiliary frame.

Besides, it will usually be sufficient to use a transverse strut having a central, either or not tubular part with smaller dimensions than an end plate to obtain a sufficiently solid whole, such that not unnecessary much material is used for the transverse struts.

According to another preferred embodiment of an auxiliary frame according to the invention, a reinforcement part is provided between the tubular part and the end plate of a transverse strut, whereby a groove is preferably provided in an above-mentioned reinforcement part which extends in the direction of the width of the transverse strut and which is provided over the entire height of the transverse strut, which groove forms a hole to anchor a bolt of the equipment in.

Such an embodiment is very interesting in that the groove for fixing the crane is provided in a reinforced part of the transverse strut, i.e. exactly on the place where the load to be expected is the largest.

The length of the aforesaid groove is preferably at least as large as the smallest axial intermediate distance between two successive perforations in a longitudinal strut, since it is made sure in this way that any crane or equipment can be mounted on the auxiliary frame, irrespective of the intermediate distance between the bolts for fixing the crane on the auxiliary frame, at least for any distance measured in the longitudinal direction of the auxiliary frame.

Preferably even, the length of the aforesaid groove is at least as large as the smallest axial intermediate distance between two successive perforations in a longitudinal strut plus the diameter of a bolt of the crane.

Additionally or as an alternative, with an auxiliary frame according to the invention, use can be made of coupling means formed of a perforated, flat coupling plate with which such a coupling means can be fixed to the back of a longitudinal strut of the auxiliary frame and whereby such a coupling means is also provided with a longitudinal groove to anchor a bolt of the crane in.

Such coupling means may be for example hook-shaped supports, whereby a bearing face is provided at right angles to the aforesaid coupling plate in which the aforesaid longitudinal groove has been provided.

Another possibility for realising such a coupling means might consist in providing the legs of a U-shaped strut on the coupling plate, for example by welding them onto the latter, whereby the back of the U-shaped strut is parallel to the coupling plate.

The opening between the legs of the U-strut and the coupling plate thereby forms an aforesaid longitudinal groove through which bolts of the crane can be provided.

In short, such a coupling means has a shape which shows much resemblance to the far end of an aforesaid cross girder, as a result of which a certain standardisation is obtained and as a result of which the production of the components of the auxiliary frame is simplified.

In order to somewhat restrict the width of the groove in such coupling means, an additional strut may possibly be provided between the legs of the U-strut on the coupling plate.

With such coupling means may for example first be composed an auxiliary frame by connecting longitudinal struts and transverse struts, whereby the position of the crane to be mounted is hardly or not at all taken into account, after which, by means of the coupling means, the actual support of the crane is obtained.

Such coupling means may also be attached on the outer sides of the longitudinal struts, such that they can be of use in cases where the crane to be mounted is wider, for example, than the transverse struts of the auxiliary frame or than the chassis of the vehicle.

In order to better explain the characteristics of the invention, the following preferred embodiments of an auxiliary frame according to the invention are described by way of example only without being limitative in any way, with reference to the accompanying drawings, in which:
figure 1 is a side elevation of a lorry on which a crane is mounted by means of an auxiliary frame according to the invention;
figure 2 is a view from above of the auxiliary frame as applied in figure 1;
figure 3 is a section through the chassis, the auxiliary frame and the crane according to a direction indicated with III-III in figure 2;
figure 4 is a view from above of a part of a transverse strut of the auxiliary frame, indicated by IV-IV in figure 3;
figure 5 is a cross section of the tubular part of a transverse strut indicated by line V-V in figure 3;
figure 6, analogous to figure 2, shows a view from above of an auxiliary frame according to the invention whereby use is made of alternative coupling means;

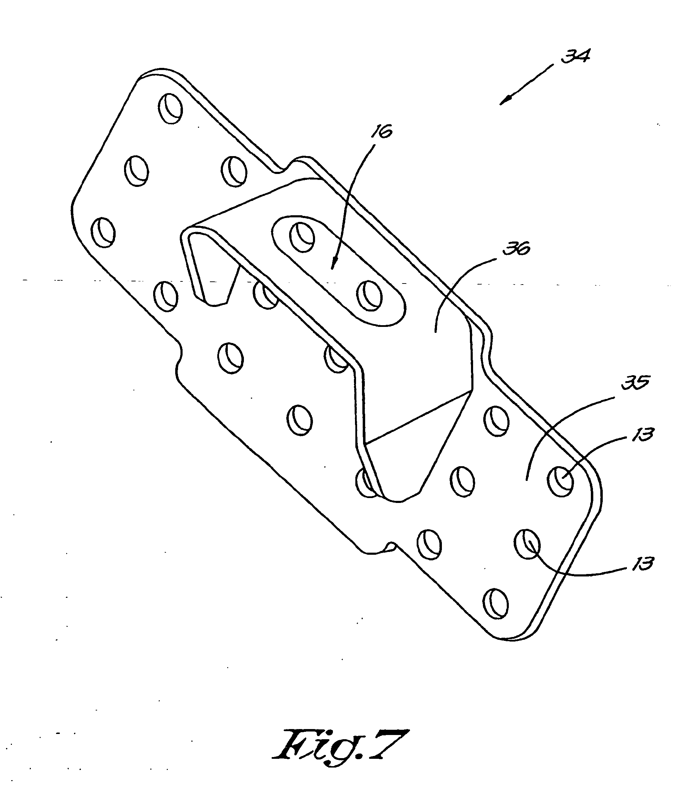

figure 7 shows such coupling means in the form of a hook-shaped support, seen in perspective;
and figure 8 shows another possible embodiment of such coupling means, seen in perspective.

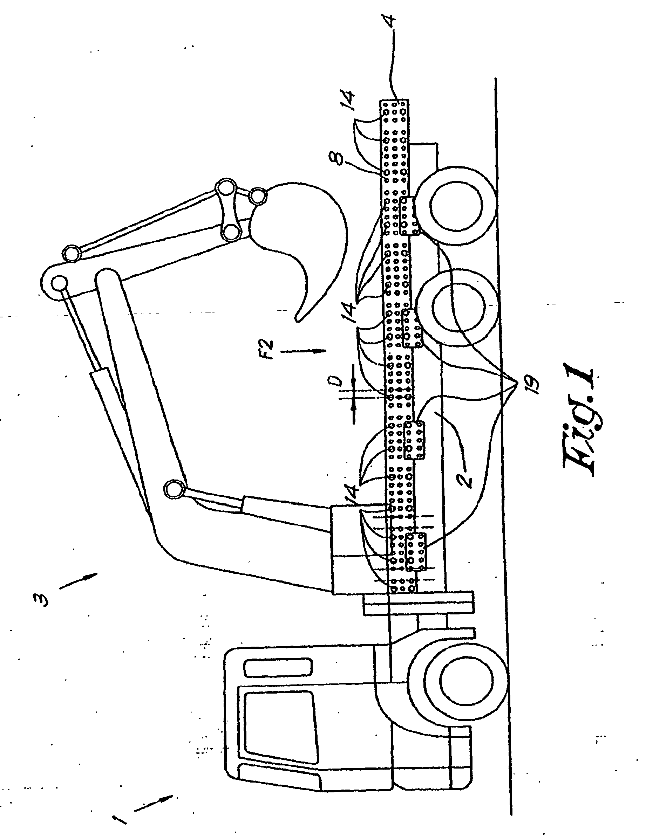

Figure 1 represents a lorry 1 whereby a crane 3 is mounted on the chassis 2 of the lorry 1 by means of an auxiliary frame 4 according to the invention.

However, the invention is not restricted to mounting cranes 3 on lorries 1; it might just as well concern a crane on any vehicle whatsoever, such as for example the wagon of a train or the like.

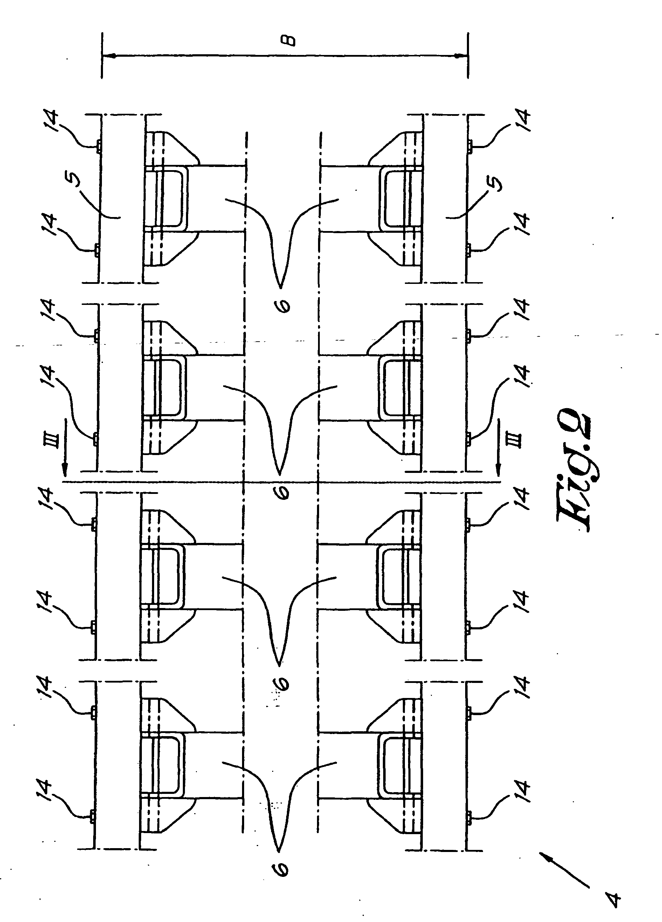

As is represented in further detail by means of figures 2 to 5, the auxiliary frame 4 is in this case composed of two longitudinal struts 5 and several transverse elements 6 in the shape of transverse struts 6 forming the width B of the auxiliary frame 4 and which are provided between the longitudinal struts 5 and which are connected to the latter.

In particular, the longitudinal struts 5 of the auxiliary frame 4 are U-shaped in the given example, whereby the open sides 7 of the U-shaped longitudinal struts 5 are directed towards one another.

Holes 8 are hereby provided in the longitudinal struts 5, for example by perforating holes 8 in the back 9 of the U-shaped strut 5 which are situated at a regular distance D from one another in the longitudinal direction.

Several rows of holes 8 are preferably provided over the height H of a longitudinal strut, at a distance E from one another, which rows of holes 8 extend in the longitudinal direction of a longitudinal strut 5.

In this case, three such rows of holes 8 are provided over the height H.

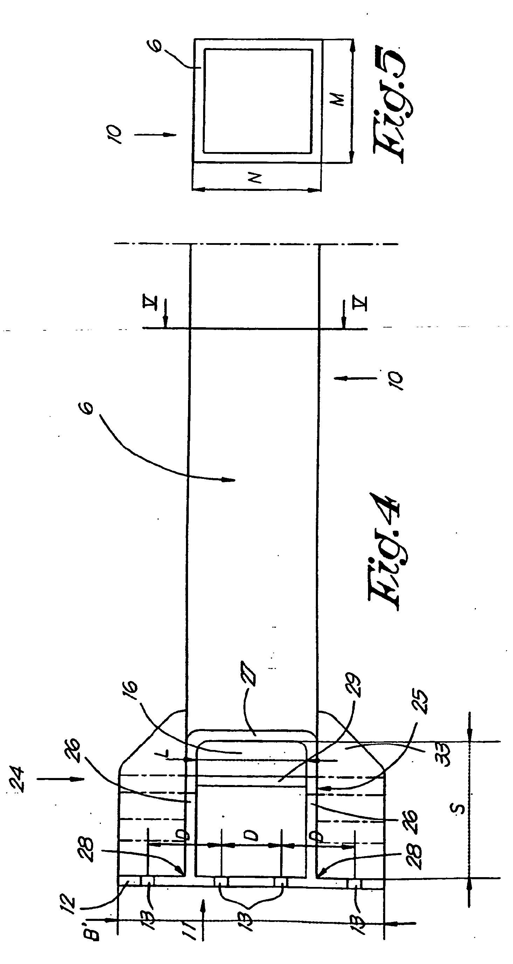

As is shown in figure 5, the central parts 10 of the transverse struts 6 are made tubular.

In principle, this central part 10 of a transverse strut 6 may assume all sorts of other shapes while still remaining within the scope of the invention.

The far ends 11 of the transverse struts 6 are each provided with an end plate 12 with which a transverse strut 6 may rest against a longitudinal strut 5.

Every end plate 12 is hereby moreover provided with perforations or holes 13 corresponding to the perforations 8 in the longitudinal struts 5, such that a transverse strut 6 can be connected to a longitudinal strut 5 by means of bolts 14 and nuts 15.

In other words, the end plates 12 are in this case also provided with holes 13 situated at a distance D from one another in the longitudinal direction, whereas three rows of such holes 13 are provided one above the other at a regular distance E over the height H' of the end plate 12.

Thanks to the correspondence between the holes 8 in the longitudinal struts 5 and the holes 13 in the end plates 12 of the transverse struts 6, it is possible to fix a transverse strut 6 to a longitudinal strut in different positions situated at discrete distances D from one another in the longitudinal direction.

The height H' of an aforesaid end plate 12 is preferably equal to or practically corresponds to the available height H" in a U-shaped longitudinal strut 5.

As a result, the holes 8 and 13 can be positioned more easily over one another, for example, and a solid whole will be moreover obtained after the transverse struts 6 have been coupled to the longitudinal struts 5.

A major characteristic of an auxiliary frame 4 according to the invention is that the transverse elements 6 are provided with grooves 16 extending widthwise (i.e. grooves extending in the longitudinal direction of the longitudinal struts 5), which grooves 16 are designed for fixing the crane 3 by means of bolts which must be provided through said grooves 16.

It is hereby of primary importance according to the invention that the distance D between the holes 8 in the longitudinal struts 5 and the length L of the grooves 16 is selected such that the crane 3 can be fixed in any place whatsoever in the longitudinal direction of a longitudinal strut 5.

In practice, one only has to make sure that the aforesaid length L of a groove 16 of a transverse strut 6, measured in said longitudinal direction, is larger than the axial intermediate distance D between successive holes 8 and/or 13.

Indeed, in this case, a transverse strut 6 can always be fixed to a longitudinal strut 5 in such a manner that any bolt 17 whatsoever of a crane 3, designed for mounting the crane 3 on the auxiliary frame 4, can be provided through an aforesaid groove 16 in the transverse strut 6, after which a nut 18 can be provided on the part of the bolt 17 protruding from the transverse strut 6.

Preferably, the aforesaid length L of the groove 16 in a transverse strut 6 is at least as large as the sum of the axial intermediate distance D between successive holes 8 and/or 13 and the diameter of a bolt 17 of the crane 3.

Any possible methods can be applied for fixing the auxiliary frame 4 to the chassis 2 of the lorry 1.

In the examples represented in the figures, use was made of coupling plates 19 which are screwed down on the U-shaped longitudinal struts 5 of the auxiliary frame 4 on the one hand and on the longitudinal struts of the chassis 2 of the lorry 1 on the other hand, which in this case are U-shaped as well.

Naturally, many alternatives are possible.

However, the invention aims to always use straight longitudinal struts 5 for the auxiliary frame 4, irrespective of the shape of the chassis 2 of the lorry 1 or the vehicle.

The invention also aims to always use transverse struts 6 having a fixed length, since the width of the auxiliary frame 4 is selected as a fixed, standard data, such that the multitude of widths that are applied for the chassis in the lorries must not be taken into account.

In this way, the production of large series of auxiliary frames 4 according to the invention is made a lot less expensive.

According to the invention, it is not excluded, however, to use auxiliary frames 4 with varying dimensions as a function of the lifting capacity of the crane 3.

The aim hereby is to use auxiliary frames 4 with certain dimensions for some series of cranes 3 with a lifting capacity within a certain range, whereas other dimensions will be applied for other series of cranes 3.

Typical adjustments to the dimensions are for example adjustments to the thickness of the metal of the used struts 5 and 6, changes to the shape and dimensions of the central part 10 of a transverse strut 6, changes to the width and height of an end plate 12, etc.

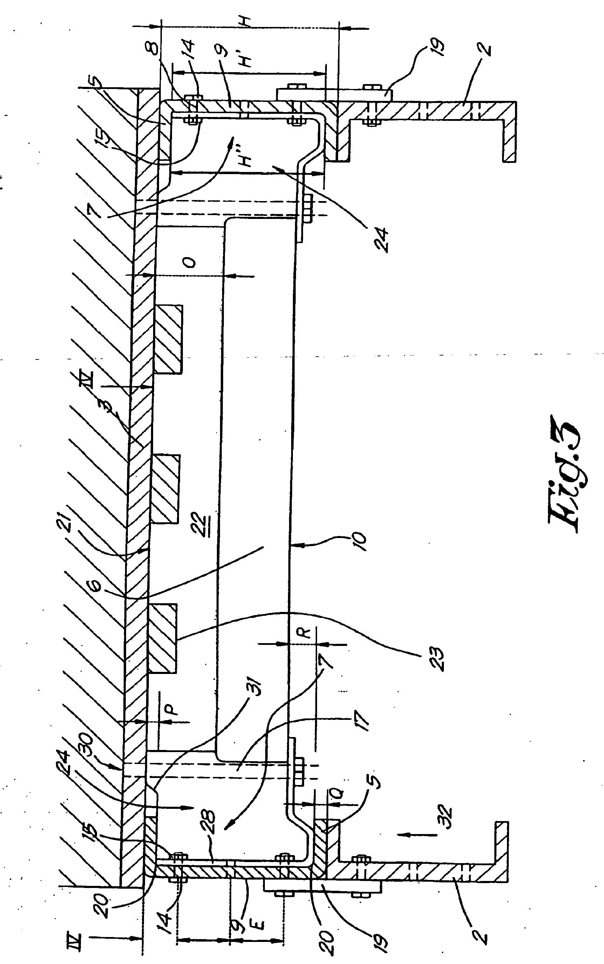

As can be derived from figures 3 and 4, in the given example, the height N and the width M of the tubular part 10 of a transverse strut 6 are considerably smaller than the height H' and the width B' respectively of an end plate 12 of the transverse strut 6.

Such restricted dimensions of the tubular part 10 of the transverse struts 6 are tolerable, since the transverse struts 6 only contribute to the actual support of the crane 3 to a limited extent, and are designed rather to keep the crane 3 and auxiliary frame 4 together as a whole.

Indeed, the actual load of the crane 3 is mainly transferred to the chassis 2 of the lorry 1 via the U-shaped longitudinal struts 5 of the auxiliary frame 4.

The central, tubular part 10 is not centred in height on the end plates 12 of the transverse strut 6, but this tubular part 10 is connected to said end plates 12 of the transverse strut 6 at a longitudinal edge 20 of the end plates 12 or at least in the vicinity of such a longitudinal edge 20.

This is advantageous in that the central art of a transverse strut 6 represents a certain offset O in relation to the opposite longitudinal edges 20 of the end plates 12 at the far ends 11 of the transverse strut 6.

If the longitudinal edges 20 of the far ends 11 of a transverse strut 6 are provided with a flat surface 21, a space 22 will be created between said face 21 and the central part of the transverse strut 6 thanks to said offset O.

This space 22 can be used for any possible projections 23 on the bearing face 21 of the crane 3.

In the other direction, i.e. the width of the transverse strut 6 or the longitudinal direction of an end plate 12, a transverse strut 6 is made symmetrical, however, whereby the central, tubular part 10 is centred all right on the end plates 12 of the transverse strut 6 in this direction.

Another characteristic of a transverse strut 6 of the auxiliary frame 4, represented in the figures that are discussed here, is that a reinforcement part 24 is provided between the tubular part 10 and the end plate 12 of a transverse strut 6.

In particular, a U-shaped end strut 25 is provided between the tubular part 10 and an end plate 12 of a transverse strut 6 so as to form the reinforcement part 24.

The legs 26 of this U-shaped end strut 25 are hereby directed towards the end plate 12, and the back 27 of the U-shape 25 connects to the tubular part 10 of the transverse strut 6.

Further, the width of the U-shaped end strut 25 corresponds to the width of the tubular part 10, and the end strut 25 extends in the height of the end plate 12 with its longitudinal direction.

The legs 26 of the U-shaped end strut 25 extend with their longitudinal sides 28 over the entire height H' of an end plate 12.

Moreover, according to the invention, an above-mentioned groove 16 for the bolts 17 of the crane 3 is preferably provided in the reinforcement part 24.

In this case, such a groove 16, which serves as a hole for a bolt 17 of the crane 3, is formed of a partition 29 provided between the U-shaped legs 26 and parallel to the back 27 of the U-shaped end strut 25.

Further, it is important to note that the back side 27 of the U-shaped end strut 25 has a staggered part P on at least one far end 30 in relation to the aforesaid longitudinal sides 28 of the U-shaped legs 26 of the end strut 25 so as to form a stop 31 between the transverse strut 6 and a longitudinal strut 5.

The height P of the stop-forming part of the back 27 hereby corresponds to a strut thickness Q-of a longitudinal strut 5.

This has for a result that the bearing face 21 of the crane 3 can perfectly rest on the longitudinal struts 5 and simultaneously also on the back 27 of the end strut 25, such that tightening the bolt 17 with the nut 18 on the auxiliary frame 4 does not generate any forces of importance in the bolts 14 with which a transverse strut 6 is screwed down on a longitudinal strut 5.

In the given example, the reinforcement part 24 also has a somewhat staggered part R between the tubular part 10 and a coupling plate 12 on the other far end 32 of the end strut 25.

In this way is made sure that the protruding parts, as a result of the crane 3 being screwed down on the auxiliary frame 4 with the bolts 17 and nuts 18, remain within the height H of the auxiliary frame 4.

Also the distance S between the actual back 27 of the U-shaped end strut 25 and the end plate 12 matters.

This distance S must be sufficiently large so as to be able to apply the nuts 15 and/or bolts 14 in the U-shaped end strut 25 in order to fix these bolts 14 and/or nuts 15 by means of nut spanners and the like.

The reinforcement part 24 on a far end 11 of a transverse strut is in this case also provided with a bottom 33 to seal the opening between the end plate 12 and the U-shaped end strut 25 on the other far end 32 of the U-shaped end strut 25.

On the sides 28 at the end plate 12, this bottom 33 extends over the entire width B' of the end plate 12, and it narrows somewhat towards the central tubular part 10.

Such a bottom 33 serves as a sort of wing providing a certain support between the end plate 12 and the tubular part 10 of a transverse strut 6, and it helps to absorb any possible torsional stress between the tubular part 10 and the coupling plate 12.

It is clear that an auxiliary frame 4 according to the invention is very easy to mount on the chassis 2 of a lorry 1.

As soon as the position of the crane 3 on the lorry 1 has been fixed, one can start screwing down or riveting the auxiliary frame 4 to the chassis 2 by means of the coupling plates 19.

Further, the combination of the holes 8 and 13 with the grooves 16 allows for a very simple mounting of a crane 3 or the like on the auxiliary frame 4 itself.

Moreover, an auxiliary frame 4 according to the invention can be easily dismounted after having been used with a first type of crane 3 or a first type of vehicle 1 to be mounted thereafter on another type of crane 3 or on another type of vehicle 1.

It will not even always need to be entirely disassembled.

It may be sufficient to displace the transverse struts 6 in relation to the longitudinal struts 5, for example in order to move a crane 3 on a lorry 1 or to apply another crane 3 on the same lorry, without thereby necessarily having to dismount the entire auxiliary frame 4 from the lorry 1.

The parts out of which an auxiliary frame 4 according to the invention is made are always identical, and therefore they can be manufactured as standard in large series.

Moreover, said parts may be subjected to a surface treatment beforehand, such as for example sandblasting, painting, galvanizing or the like.

In this way is avoided that the auxiliary frame has to be assembled and disassembled repeatedly for such a surface treatment, as is the case with the known auxiliary frames.

Moreover, additional transports of parts of the auxiliary frame to companies specialised in such surface treatments will be no longer required, which again results in much time-saving and which strongly reduces the costs.

In short, an auxiliary frame 4 according to the invention is advantageous as far as installation, multiple usage, lower production costs and lower mounting costs are concerned.

Naturally, many alternative embodiments of an auxiliary frame 4 according to the invention are possible.

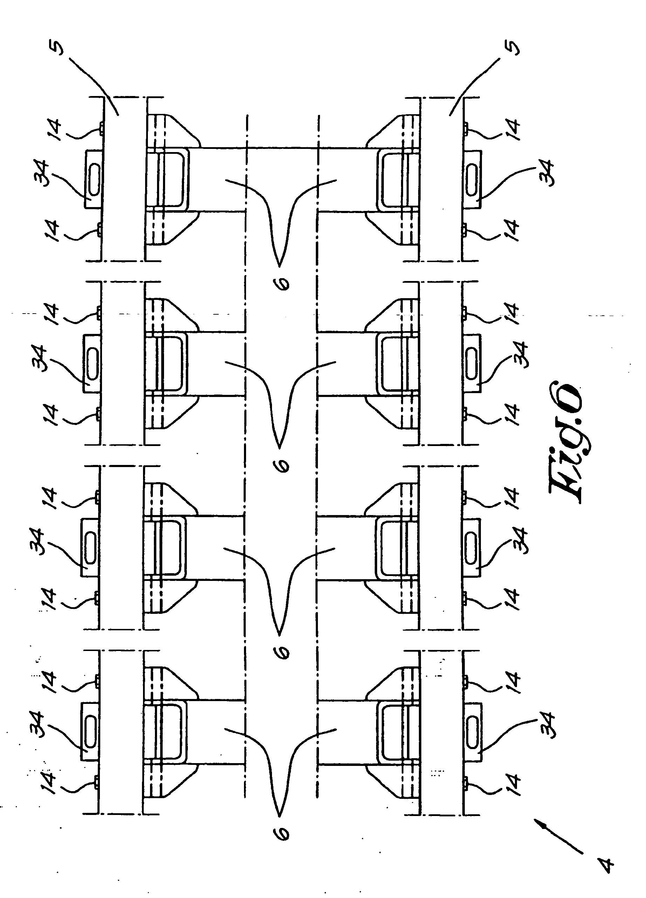

Figure 6 shows such an alternative, whereby transverse elements 34 in the shape of hook-shaped supports 34 are this time provided on the longitudinal struts 5.

These hook-shaped supports 34 are formed of a perforated, flat coupling plate 35 with which the hook-shaped support 34 can be fixed to the back of a longitudinal strut 5 of the auxiliary frame 4, and of a bearing face 36 provided at right angles on the coupling plate 35 and in which has been provided a longitudinal groove 16 for anchoring bolts 17 of the equipment or the crane 3.

The length L of the grooves 16 must hereby again be larger than the axial intermediate distance D between the holes 8 in the longitudinal struts 5 so as to be able to provide support to cranes 3 in the most varied forms or in the most varied positions in relation to the lorry 1.

Naturally, many other forms of transverse elements 34 are conceivable according to the invention; it is also possible to combine hook-shaped supports 34 with grooves 16 and transverse struts 6 with grooves 16 or the like.

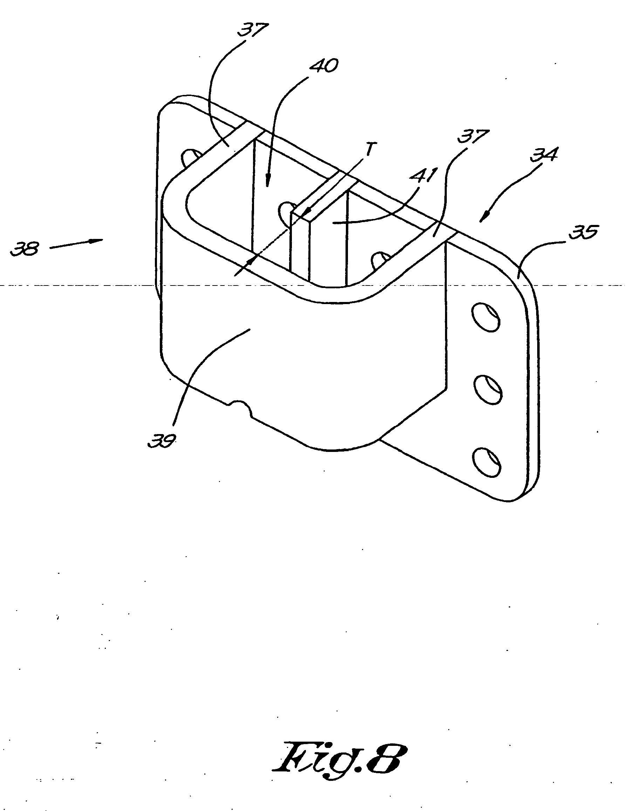

A very practical alternative form of a transverse element or of a coupling means 34 is represented in figure 8.

The legs 37 of a U-shaped strut 38 are hereby provided on an aforesaid coupling plate 35, for example by welding them onto the latter.

The back 39 of the U-shaped strut 38 is hereby parallel to the coupling plate 35.

The opening 40 between the legs of the U-strut and the coupling plate forms an aforesaid longitudinal groove 16 through which bolts 17 of the crane 3 can be provided.

In short, such a coupling means 34 in this case has a shape which strongly resembles the far end 11 of an aforesaid transverse strut 6.

In order to somewhat restrict the width T of the groove in such a coupling means 34, an additional strut 41 may possibly be provided between the legs 37 of the U-strut 38 on the coupling plate 35.

In this case, a longitudinal strut 41 has been applied to that end, but other shapes are not excluded either.

Finally, we summarize the basic idea of the present invention.

In the niche market of mounting hydraulic cranes 3 on lorries, any possible crane 3 of any possible brand can be mounted on a lorry 1 with an auxiliary frame 4 according to the invention.

Moreover, such an auxiliary frame 4 can be composed with only a few standard components, which makes the production of such auxiliary frames 4 in large amounts a lot cheaper.

Also important is that the position of the crane 3 on the lorry 1 can be freely selected, even while it is actually being mounted.

This results from the unique combination of holes 8 and 13 on the one hand, and a sufficiently large length L of the groove 16 on the other hand.

The invention is by no means restricted to the embodiments of an auxiliary frame 4 according to the invention described by way of example and represented in the accompanying drawings; on the contrary, such auxiliary frames 4 can be made in many other ways while still remaining within the scope of the invention.

## Claims

1. Auxiliary frame (4) for mounting a crane (3) on the chassis (2) of a vehicle (1), which auxiliary frame (4) is composed of at least two longitudinal struts (5) and at least two transverse elements (6,34) which can be displaced in the longitudinal direction of the longitudinal struts (5) in a discontinuous or gradual manner by means of bolts (14) which are provided through holes (8) in the longitudinal struts (5), which holes (8) are situated at a distance (D) from one another in the longitudinal direction, **characterised in that** the transverse elements (6,34) are provided with grooves (16) extending in the longitudinal direction which are designed for fixing the crane (3) by means of bolts (17) which are provided through these grooves (16) and whereby the distance (D) between the holes (8) in the longitudinal struts (5) on the one hand and the length (L) of the grooves (16) on the other hand is selected such that the crane (3) can be fixed in any location whatsoever in the longitudinal direction of a longitudinal strut (5).

2. Auxiliary frame (4) according to claim 1, **characterised in that** it comprises at least two longitudinal struts (5) which are connected by means of at least two transverse struts (6).

3. Auxiliary frame (4) according to claim 2, **characterised in that** the aforesaid longitudinal struts (5) are U-shaped, whereby the open sides (7) of the U-shaped longitudinal
struts (5) are directed towards one another.

4. Auxiliary frame (4) according to claim 2 or 3, **characterised in that** the longitudinal struts (5) are provided with perforations (8) situated at a regular distance (D) from one another.

5. Auxiliary frame (4) according to claim 4, **characterised in that** the central part (10) of the transverse struts (6) is tubular.

6. Auxiliary frame (4) according to claim 4 or 5, **characterised in that** the far ends (11) of the transverse struts (6) are provided with an end plate (12) so that they can rest against a longitudinal strut (5), whereby every end plate (12) is provided with perforations (13) corresponding to the perforations (8) in the longitudinal struts (5) for coupling a transverse strut (6) to a longitudinal strut (5) by means of bolts (14) and nuts (15).

7. Auxiliary frame (4) according to claims 3 and 6, **characterised in that** the height (H') of an aforesaid end plate (12) corresponds to the available height (H") in a U-shaped longitudinal strut (5).

8. Auxiliary frame (4) according to claim 5 to 7, **characterised in that** the height (N) of the tubular part (10) of a transverse strut (6) is smaller than the height (H') of an end plate (12) of the transverse strut (6).

9. Auxiliary frame (4) according to claims 5 to 7, **characterised in that** the width (M) of the tubular part (10) of a transverse strut (6) is smaller than the width (B') of an end plate (12) of the transverse strut (6).

10. Auxiliary frame (4) according to claim 8 or 9, **characterised in that** the central, tubular part (10) is not centred in the height of a transverse strut (6), but **in that** it is connected to an end plate (12) of the transverse strut (6) at a longitudinal edge (19) of said end plate (12) or in the vicinity of such a longitudinal edge (19).

11. Auxiliary frame (4) according to claim 9 or 10, **characterised in that** the central, tubular part (10) of a transverse strut (6) is centred widthwise on an end plate (12) of the transverse strut (6).

12. Auxiliary frame (4) according to claim 6, **characterised in that** a reinforcement part (24) is provided between the central part (10) and an end plate (12) of a transverse strut (6).

13. Auxiliary frame (4) according to claim 12, **characterised in that** a groove (16) is provided in an aforesaid reinforcement part (24) which extends in the width of the transverse strut (6) and which is provided over the entire height of the transverse strut (6), which groove (16) forms a hole for the anchoring of a bolt (17) of the equipment (3).

14. Auxiliary frame (4) according to claim 13, **characterised in that** the length (L) of the groove (16) is at least as large as the axial intermediate distance (D) between two successive perforations (8) of a longitudinal strut (5), i.e. the intermediate distance (D) measured according to the longitudinal direction of the longitudinal strut (5).

15. Auxiliary frame (4) according to claim 14, **characterised in that** the length (L) of the groove (16) is at least as large as the sum of the axial intermediate distance (D) between two successive perforations (8) of a longitudinal strut (5) and the diameter of a bolt (17) for the crane (3).

16. Auxiliary frame (4) according to any one of claims 12 to 15, **characterised in that** a U-shaped end strut (25) is provided so as to form the reinforcement part (24) between the tubular part (10) and an end plate (12) of a transverse strut (6), whereby the legs (26) of this U-shape (25) are directed towards the end plate (12) and whereby the back (27) of said U-shape (25) is provided adjacent to the tubular part (10), with a width corresponding to the width of the tubular part (M) and with one longitudinal side (28) extending in the height of the end plate (12).

17. Auxiliary frame (4) according to claims 13 and 16, **characterised in that** between the U-shaped legs (26) and parallel to the back (27) of the U-shaped end strut (25) is provided a partition (29) in order to form an aforesaid groove (16) which serves as a hole for a bolt (17) of the equipment (3).

18. Auxiliary frame (4) according to any one of claims 16 or 17, **characterised in that** the legs (26) of the U-shaped end strut (25) extend with their longitudinal sides (28) over the entire height (H') of the end plate (12).

19. Auxiliary frame (4) according to claim 18, **characterised in that** the back side (27) of the U-shaped end strut (25) has a staggered part (P) on at least one far end (30) in relation to the aforesaid longitudinal sides (28) of the U-shaped legs (26) of the end strut (25) so as to form a stop (31) between the transverse strut (6) and a longitudinal strut (5), whereby the height (P) of the stop-forming part (31) of the back (27) corresponds to the strut thickness (Q) of a longitudinal strut (5).

20. Auxiliary frame (4) according to claim 16, **characterised in that** the distance (S) between the actual back (27) of the U-shaped end strut (25) and the end plate (12) is sufficiently large for applying nuts (15) and/or bolts (14) in the U-shaped end strut (25) and for fixing these bolts (14) and/or nuts (15) by means of nut spanners and the' like.

21. Auxiliary frame (4) according to claim 20, **characterised in that** a bottom (33) is provided on the other far end (32) of the U-shaped end strut (25) to seal the opening between the longitudinal sides (28) of the legs (26) on the end plate (12) and the back (27) of the U-shaped end strut (25).

22. Auxiliary frame (4) according to claim 21, **characterised in that** the aforesaid bottom (33) extends on the side of the end plate (12) at the U-shaped end strut (25) over the entire width (B') of the end plate (12) and narrows somewhat towards the central tubular part (10).

23. Auxiliary frame (4) according to any one of the preceding claims, **characterised in that** it is provided with hook-shaped supports (34) formed of a perforated flat coupling plate- (35) with which the hook-shaped support (34) can be fixed to the back of a longitudinal strut (5) of the auxiliary frame (4), and of a bearing face (36) standing at right angles to the coupling plate (35) and which is provided with a longitudinal groove (16) for anchoring a bolt (17) of the equipment (3).

24. Auxiliary frame (4) according to any one of the preceding claims, **characterised in that** it is provided with coupling means (34) whereby the legs (37) of a U-shaped strut (38) are provided on a coupling plate (35) and whereby the back (39) of the U-shaped strut (38) is parallel to the coupling plate (35).

25. Auxiliary frame (4) according to claim 24, **characterised in that** an additional strut (41) is provided between the legs (37) of the U-strut (38) on the coupling plate (35).

## Patentansprüche

1. Hilfsrahmen (4) zur Montage eines Krans (3) auf dem Fahrgestell (2) eines Fahrzeugs (1), welcher Hilfsrahmen (4) aus mindestens zwei Längsprofilen (5) und mindestens zwei Querelementen (6, 34) zusammengestellt ist, welche letzteren auf diskontinuierliche oder graduelle Weise in der Längsrichtung der Längsprofile (5) verstellbar sind, mittels Bolzen (14), die durch Löcher (8) in den Längsprofilen (5) angebracht werden, welche Löcher (8) sich in einem Abstand (D) voneinander in der Längsrichtung befinden, **dadurch gekennzeichnet, dass** die Querelemente (6, 34) mit sich in der Längsrichtung erstreckenden Nuten (16) versehen sind, die zur Befestigung des Krans (3) mittels Bolzen (17), die durch diese Nuten (16) angebracht werden, gestaltet sind, und wobei der Abstand (D) zwischen den Löchern (8) in den Längsprofilen (5) einerseits und die Länge (L) der Nuten (16) andererseits so gewählt ist, dass der Kran (3) an gleich welcher Stelle in der Längsrichtung eines Längsprofils (5) befestigt werden kann.

2. Hilfsrahmen (4) nach Anspruch 1, **dadurch gekennzeichnet, dass** er mindestens zwei Längsprofile (5) umfasst, die mittels mindestens zweier Querprofile (6) miteinander verbunden sind.

3. Hilfsrahmen (4) nach Anspruch 2, **dadurch gekennzeichnet, dass** die vorgenannten Längsprofile (5) U-förmig sind, wobei die offenen Seiten (7) der U-förmigen Längsprofile (5) zueinander gerichtet sind.

4. Hilfsrahmen (4) nach Anspruch 2 oder 3, **dadurch gekennzeichnet, dass** die Längsprofile (5) mit Perforationen (8) versehen sind, die in einem regelmäßigem Abstand (D) voneinander angebracht sind.

5. Hilfsrahmen (4) nach Anspruch 4, **dadurch gekennzeichnet, dass** der zentrale Teil (10) der Querprofile (6) köcherförmig ist.

6. Hilfsrahmen (4) nach Anspruch 4 oder 5, **dadurch gekennzeichnet, dass** die Enden (11) der Querprofile (6) mit einer Endplatte (12) versehen sind, sodass sie gegen ein Längsprofil (5) anliegen können, wobei jede Endplatte (12) mit Perforationen (13) versehen ist, die den Perforationen (8) in den Längsprofilen (5) entsprechen, zum Koppeln eines Querprofils (6) an ein Längsprofil (5) mittels Bolzen (14) und Muttern (15).

7. Hilfsrahmen (4) nach Ansprüchen 3 und 6, **dadurch gekennzeichnet, dass** die Höhe (H') einer vorgenannten Endplatte (12) der verfügbaren Höhe (H") in einem U-förmigen Längsprofil (5) entspricht.

8. Hilfsrahmen (4) nach Anspruch 5 bis 7, **dadurch gekennzeichnet, dass** die Höhe (N) des köcherförmigen Teils (10) eines Querprofils (6) kleiner als die Höhe (H') einer Endplatte (12) des Querprofils (6) ist.

9. Hilfsrahmen (4) nach Ansprüchen 5 bis 7, **dadurch gekennzeichnet, dass** die Breite (M) des köcherförmigen Teils (10) eines Querprofils (6) kleiner als die Breite (B') einer Endplatte (12) des Querprofils (6) ist.

10. Hilfsrahmen (4) nach Anspruch 8 oder 9, **dadurch gekennzeichnet, dass** der zentrale, köcherförmige Teil (10) nicht in der Höhe eines Querprofils (6) zentriert ist, sondern dass er an einer Längskante (19) der Endplatte (12) oder in der Nähe einer solchen Längskante (19) mit einer Endplatte (12) des Querprofils (6) verbunden ist.

11. Hilfsrahmen (4) nach Anspruch 9 oder 10, **dadurch gekennzeichnet, dass** der zentrale, köcherförmige Teil (10) eines Querprofils (6) in der Breite auf einer Endplatte (12) des Querprofils (6) zentriert ist.

12. Hilfsrahmen (4) nach Anspruch 6, **dadurch gekennzeichnet, dass** ein Verstärkungsteil (24) zwischen dem zentralen Teil (10) und einer Endplatte (12) eines Querprofils (6) vorgesehen ist.

13. Hilfsrahmen (4) nach Anspruch 12, **dadurch gekennzeichnet, dass** eine Nut (16) in einem vorgenannten Verstärkungsteil (24) vorgesehen ist, die sich in der Breite des Querprofils (6) erstreckt und die über die gesamte Höhe des Querprofils (6) angebracht ist, welche Nut (16) ein Loch zur Verankerung eines Bolzens (17) der Ausrüstung (3) bildet.

14. Hilfsrahmen (4) nach Anspruch 13, **dadurch gekennzeichnet, dass** die Länge (L) der Nut (16) mindestens so groß ist wie der axiale Zwischenabstand (D) zwischen zwei aufeinanderfolgenden Perforationen (8) eines Längsprofils (5), d.h. der Zwischenabstand (D) gemessen gemäß der Längsrichtung des Längsprofils (5).

15. Hilfsrahmen (4) nach Anspruch 14, **dadurch gekennzeichnet, dass** die Länge (L) der Nut (16) mindestens so groß ist wie die Summe des axialen Zwischenabstandes (D) zwischen zwei aufeinanderfolgenden Perforationen (8) eines Längsprofils (5) und des Durchmessers eines Bolzens (17) für den Kran (3).

16. Hilfsrahmen (4) nach einem der Ansprüche 12 bis 15, **dadurch gekennzeichnet, dass** ein U-förmiges Endprofil (25) vorgesehen ist, um das Verstärkungsteil (24) zwischen dem köcherförmigen Teil (10) und einer Endplatte (12) eines Querprofils (6) zu bilden, wobei die Schenkel (26) dieser U-Form (25) zu der Endplatte (12) gerichtet sind und wobei der Rücken (27) dieser U-Form (25) benachbart zu dem köcherförmigen Teil (10) angebracht ist, mit einer Breite, die der Breite des köcherförmigen Teils (M) entspricht, und mit einer Längsseite (28), die sich in der Höhe der Endplatte (12) erstreckt.

17. Hilfsrahmen (4) nach Ansprüchen 13 und 16, **dadurch gekennzeichnet, dass** zwischen den U-förmigen Schenkeln (26) und parallel zu dem Rücken (27) des U-förmigen Endprofils (25) eine Zwischenwand (29) vorgesehen ist, um eine vorgenannte Nut (16) zu bilden, die als Loch für einen Bolzen (17) der Ausrüstung (3) dient.

18. Hilfsrahmen (4) nach einem der Ansprüche 16 oder 17, **dadurch gekennzeichnet, dass** sich die Schenkel (26) des U-förmigen Endprofils (25) mit ihren Längsseiten (28) über die gesamte Höhe (H') der Endplatte (12) erstrecken.

19. Hilfsrahmen (4) nach Anspruch 18, **dadurch gekennzeichnet, dass** die Rückseite (27) des U-förmigen Endprofils (25) an mindestens einem Ende (30) einen versetzten Teil (P) in Bezug auf die vorgenannten Längsseiten (28) der U-förmigen Schenkel (26) des Endprofils (25) aufweist, um einen Anschlag (31) zwischen dem Querprofil (6) und einem Längsprofil (5) zu bilden, wobei die Höhe (P) des anschlagbildenden Teils (31) des Rückens (27) der Profildicke (Q) eines Längsprofils (5) entspricht.

20. Hilfsrahmen (4) nach Anspruch 16, **dadurch gekennzeichnet, dass** der Abstand (S) zwischen dem eigentlichen Rücken (27) des U-förmigen Endprofils (25) und der Endplatte (12) ausreichend groß zum Anbringen von Muttern (15) und/oder Bolzen (14) in dem U-förmigen Endprofil (25) und zum Befestigen dieser Bolzen (14) und/oder Muttern (15) mittels Schraubenschlüsseln und dergleichen ist.

21. Hilfsrahmen (4) nach Anspruch 20, **dadurch gekennzeichnet, dass** ein Boden (33) an dem anderen Ende (32) des U-förmigen Endprofils (25) vorgesehen ist, um die Öffnung zwischen den Längsseiten (28) der Schenkel (26) an der Endplatte (12) und dem Rücken (27) des U-förmigen Endprofils (25) zu verschließen.

22. Hilfsrahmen (4) nach Anspruch 21, **dadurch gekennzeichnet, dass** der vorgenannte Boden (33) sich an der Seite der Endplatte (12) an dem U-förmigen Endprofil (25) über die gesamte Breite (B') der Endplatte (12) erstreckt und zu dem zentralen köcherförmigen Teil (10) hin etwas schmaler wird.

23. Hilfsrahmen (4) nach einem der vorgenannten Ansprüche, **dadurch gekennzeichnet, dass** er mit hakenförmigen Stützen (34) versehen ist, bestehend aus einer perforierten flachen Koppelplatte (35), womit die hakenförmige Stütze (34) an dem Rücken eines Längsprofils (5) des Hilfsrahmens (4) befestigt werden kann, und aus einer Auflagefläche (36), die rechtwinklig zu der Koppelplatte (35) steht und die mit einer Längsnut (16) zur Verankerung eines Bolzens (17) der Ausrüstung (3) versehen ist.

24. Hilfsrahmen (4) nach einem der vorgenannten Ansprüche, **dadurch gekennzeichnet, dass** er mit Koppelmitteln (34) versehen ist, wobei die Schenkel (37) eines U-förmigen Profils (38) auf einer Koppelplatte (35) angebracht sind und wobei der Rücken (39) des U-förmigen Profils (38) parallel zu der Koppelplatte (35) gerichtet ist.

25. Hilfsrahmen (4) nach Anspruch 24, **dadurch gekennzeichnet, dass** ein zusätzliches Profil (41) zwischen den Schenkeln (37) des U-Profils (38) auf der Koppelplatte (35) vorgesehen ist.

## Revendications

1. Cadre auxiliaire (4) pour le montage d'une grue (3) sur le châssis (2) d'un véhicule (1), ledit cadre auxiliaire (4) étant composé d'au moins deux montants longitudinaux (5) et d'au moins deux éléments transversaux (6, 34) qui peuvent se déplacer dans la direction longitudinale des montants longitudinaux (5) d'une manière discontinue ou progressive au moyen de boulons (14) qui sont prévus dans des trous (8) pratiqués dans les montants longitudinaux (5), lesdits trous (8) étant situés à une distance (D) les uns des autres dans la direction longitudinale, **caractérisé en ce que** les éléments transversaux (6, 34) sont munis de rainures (16) s'étendant en direction longitudinale, qui sont conçues pour fixer la grue (3) au moyen de boulons (17) qui sont prévus à travers ces rainures (16), la distance (D) entre les trous (8) dans les montants longitudinaux (5) d'une part et la longueur (L) des rainures (16) d'autre part étant sélectionnées de telle sorte que la grue (3) peut être fixée à n'importe quel endroit que ce soit, dans la direction longitudinale d'un montant longitudinal (5).

2. Cadre auxiliaire (4) selon la revendication 1, **caractérisé en ce qu'**il comprend au moins deux montants longitudinaux (5) qui sont reliés l'un à l'autre au moyen d'au moins deux montants transversaux (6).

3. Cadre auxiliaire (4) selon la revendication 2, **caractérisé en ce que** les montants longitudinaux susmentionnés (5) sont configurés en U, les côtés ouverts (7) des montants longitudinaux en U (5) étant orientés l'un vers l'autre.

4. Cadre auxiliaire (4) selon la revendication 2 ou 3, **caractérisé en ce que** les montants longitudinaux (5) sont munis de perforations (8) qui sont situées à égale distance (D) les unes des autres.

5. Cadre auxiliaire (4) selon la revendication 4, **caractérisé en ce que** la partie centrale (10) des montants transversaux (6) est cylindrique.

6. Cadre auxiliaire (4) selon la revendication 4 ou 5, **caractérisé en ce que** les extrémités éloignées (11) des montants transversaux (6) sont munies d'une plaque terminale (12) de façon à pouvoir s'appuyer contre un montant longitudinal (5), chaque plaque terminale (12) étant munie de perforations (13) correspondant aux perforations (8) dans les montants longitudinaux (5) pour coupler un montant transversal (6) à un montant longitudinal (5) au moyen de boulons (14) et d'écrous (15).

7. Cadre auxiliaire (4) selon les revendications 3 et 6, **caractérisé en ce que** la hauteur (H') d'une plaque terminale susmentionnée (12) correspond à la hauteur utile (H") dans un montant longitudinal en U (5).

8. Cadre auxiliaire (4) selon les revendications 5 à 7, **caractérisé en ce que** la hauteur (N) de la partie tubulaire (10) d'un montant transversal (6) est inférieure à la hauteur (H') d'une plaque terminale (12) du montant transversal (6).

9. Cadre auxiliaire (4) selon les revendications 5 à 7, **caractérisé en ce que** la largeur (M) de la partie tubulaire (10) d'un montant transversal (6) est inférieure à la largeur (b') d'une plaque terminale (12) du montant transversal (6).

10. Cadre auxiliaire (4) selon la revendication 8 ou 9, **caractérisé en ce que** la partie centrale tubulaire (10) n'est pas centrée à hauteur d'un montant transversal (6), mais **en ce qu'**elle est reliée à une plaque terminale (12) du montant transversal (6) à un bord longitudinal (19) de ladite plaque terminale (12) ou bien à proximité d'un tel bord longitudinal (19).

11. Cadre auxiliaire (4) selon la revendication 9 ou 10, **caractérisé en ce que** la partie centrale tubulaire (10) d'un montant transversal (6) est centrée en largeur sur une plaque terminale (12) du montant transversal (6).

12. Cadre auxiliaire (4) selon la revendication 6, **caractérisé en ce qu'**on prévoit un élément de renforcement (24) entre la partie centrale (10) et une plaque terminale (12) d'un montant transversal (6).

13. Cadre auxiliaire (4) selon la revendication 12, **caractérisé en ce qu'**on prévoit une rainure (16) dans un élément de renforcement susmentionné (24) qui s'étend sur la largeur du montant transversal (6) et qui est prévue sur toute la hauteur du montant transversal (6), ladite rainure (16) formant un trou pour l'ancrage d'un boulon (17) de l'équipement (3).

14. Cadre auxiliaire (4) selon la revendication 13, **caractérisé en ce que** la longueur (L) de la rainure (16) est au moins égale à la distance intermédiaire axiale (D) entre deux perforations successives (8) d'un montant longitudinal (5), c'est-à-dire à la distance intermédiaire (D) mesurée conformément à la direction longitudinale du montant longitudinal (5).

15. Cadre auxiliaire (4) selon la revendication 14, **caractérisé en ce que** la longueur (L) de la rainure (16) est au moins égale à la somme de la distance intermédiaire axiale (D) entre deux perforations successives (8) d'un montant longitudinal (5) et du diamètre d'un boulon (17) pour la grue (3).

16. Cadre auxiliaire (4) selon l'une quelconque des revendications 12 à 15, **caractérisé en ce qu'**on prévoit un montant terminal en U (25) de façon à obtenir l'élément de renforcement (24) entre la partie tubulaire (10) et une plaque terminale (12) d'un montant transversal (6), les branches (26) de cette configuration en U (25) étant orientées en direction de la plaque terminale (12) et le dos (27) de ladite configuration en U (25) étant prévu en position adjacente à la partie tubulaire (10), avec une largeur correspondant à la largeur de la partie cylindrique (M) et avec un côté longitudinal (28) s'étendant à hauteur de la plaque terminale (12).

17. Cadre auxiliaire (4) selon les revendications 13 et 16, **caractérisé en ce que**, entre les branches en U (26) et parallèlement au dos (27) du montant terminal en U (25), on prévoit une paroi de séparation (29) afin d'obtenir une rainure susmentionnée (16) qui fait office de trou pour un boulon (17) de l'équipement (3).

18. Cadre auxiliaire (4) selon l'une quelconque des revendications 16 ou 17, **caractérisé en ce que** les branches (26) du montant terminal en U (25) s'étendent, avec leurs côtés longitudinaux (28), sur toute la hauteur (H') de la plaque terminale (12).

19. Cadre auxiliaire (4) selon la revendication 18, **caractérisé en ce que** le côté dorsal (27) du montant terminal en U (25) possède une partie (P) disposée en quinconce sur au moins une extrémité éloignée (30) par rapport aux côtés longitudinaux susmentionnés (28) des branches en U (26) du montant terminal (25) de façon à obtenir un arrêt (31) entre le montant transversal (6) et un montant longitudinal (5), la hauteur (P) de l'élément (31) du dos (27) formant un arrêt correspondant à l'épaisseur (Q) d'un montant longitudinal (5).

20. Cadre auxiliaire (4) selon la revendication 16, **caractérisé en ce que** la distance (S) entre le dos proprement dit (27) du montant terminal en U (25) et la plaque terminale (12) est suffisamment importante pour pouvoir appliquer des écrous (15) et/ou des boulons (14) dans le montant terminal en U (25) et pour fixer ces boulons (14) et/ou ces écrous (15) au moyen de clés et analogues.

21. Cadre auxiliaire (4) selon la revendication 20, **caractérisé en ce qu'**on prévoit une base (33) sur l'autre extrémité éloignée (32) du montant terminal en U (25) pour fermer de manière étanche l'ouverture ménagée entre les côtés longitudinaux (28) des branches (26) sur la plaque terminale (12) et le dos (27) du montant terminal en U (25).

22. Cadre auxiliaire (4) selon la revendication 21, **caractérisé en ce que** la base susmentionnée (33) s'étend sur le côté de la plaque terminale (12) au montant terminal en U (25) sur toute la largeur (B') de la plaque terminale (12) et se rétrécit quelque peu en direction de la partie tubulaire centrale (10).

23. Cadre auxiliaire (4) selon l'une quelconque des revendications précédentes, **caractérisé en ce qu'**il est muni de supports (34) en forme de crochets constitués d'une plaque d'accouplement plate perforée (35) avec laquelle on peut fixer le support (34) en forme de crochet au dos d'un montant longitudinal (5) du cadre auxiliaire (4), et par une face de support (36) dressée en formant un angle droit par rapport à la plaque d'accouplement (35) et munie d'une rainure longitudinale (16) pour l'ancrage d'un boulon (17) de l'équipement (3).

24. Cadre auxiliaire (4) selon l'une quelconque des revendications précédentes, **caractérisé en ce qu'**il est muni de moyens d'accouplement (34), les branches (37) du montant en U (38) étant prévues sur une plaque d'accouplement (35), le dos (39) du montant en U (38) étant parallèle à la plaque d'accouplement (35).

25. Cadre auxiliaire (4) selon la revendication 24, **caractérisé en ce qu'**on prévoit un montant supplémentaire (41) entre les branches (37) du montant en U (38) sur la plaque d'accouplement (35).
